# EUROPÄISCHE PATENTANMELDUNG

(11) **EP 0 581 089 A2**
(43) Veröffentlichungstag der Anmeldung: **02.02.1994**
(21) Anmeldenummer: 93111076.1
(22) Anmeldetag: 10.07.1993
(51) Int. Cl.: B03B 9/06

(54) **Verfahren zum Behandeln von Metall-Kunststoff-Verbundstoffen**

(30) Priorität: 29.07.1992 DE 4225037; 19.02.1993 DE 4305072; 22.10.1992 DE 4235294
(71) Anmelder: Dipl.-Ing. SF-Ing. MANFRED BAHNEMANN RECYCLING-SYSTEME GmbH, D-78259 Mühlhausen-Ehingen (DE)
(72) Erfinder: Muther, Christof, CH-6030 Ebikon (CH); Bahnemann, Manfred, D-7701 Mühlhausen/Ehingen (DE)
(74) Vertreter: Weiss, Peter, Dr. rer. nat.

(57) **Zusammenfassung**

Bei einem Verfahren zum Behandeln von Metall-Kunststoff-Verbundstoffen, beispielsweise von Aluminium-Kunststoff-Verbundfolie, wird eine Deformierung des Verbundstoffes und eine Trennung unter Ausnutzung eines Unterschiedes der einzelnen Stoffe durchgeführt.

## Beschreibung

Die Erfindung betrifft ein verfahren zum Behandeln von Metall-Kunststoff-Verbundstoffen, beispielsweise von Aluminium-Kunststoff-Verbundfolie.

Verbundstoffe kommen heute in fast allen Bereichen des täglichen Lebens vor. Gedacht ist vor allem an den Verpackungsbereich, aus dem Metall-Kunststoff-Verbundfolien überhaupt nicht mehr wegzudenken sind.

Probleme bilden diese Verbundfolien vor allem bei der Entsorgung, da bislang ein Trennen der Metallbestandteile vom Kunststoffbestandteil nicht stattfindet. Diese Verbundstoffe werden heute fast ausschliesslich verbrannt oder deponiert. Dass dies nicht umweltverträglich ist, bedarf keiner näheren Erläuterung.

Zu den Metall-Kunststoff-Verbundstoffen, welche zukünftig geordnet entsorgt werden müssen, gehören vor allem auch die Abfälle aus der Leiterplattenfabrikation. Gerade dort sind mit Metall beschichtete Kunststoffplatten bislang unersetzlich.

Der vorliegenden Erfindung liegt die Aufgabe zugrunde, ein Verfahren der o.g. Art zu entwickeln, mit welchem Verbundstoffe so behandelt werden können, dass eine ordnungsgemässe Entsorgung oder aber eine Rückgewinnung von Wertstoffen erfolgt.

Zur Lösung dieser Aufgabe führt eine Deformierung des Verbundstoffes und eine Trennung unter Ausnutzung eines Unterschiedes der einzelnen Stoffe.

Dabei kann die Deformierung des Verbundstoffes durch eine selektive Mahlung erfolgen.

Durch die selektive Mahlung erfolgt ein Zerkleinern des Verbundstoffes in kleinste Komponente, wobei sich die einzelnen Komponenten bezüglich Dimension und Geometrie infolge ihrer unterschiedlichen Festigkeitseigenschaften auch unterschiedlich verhalten. Es hat sich herausgestellt, dass beim Mahlen beispielsweise in einer Mikrowirbelmühle die Bestandteile aus Polyäthylen im wesentlichen unverändert bleiben, während Bestandteile beispielsweise aus Aluminium, die vorher in flächiger Form vorlagen, zu mikroskopisch kleinen Kügelchen deformiert werden. Bestandteile aus Polystyrol beispielsweise werden ebenfalls deformiert, jedoch nur bis zu einer Grösse, welche erheblich grösser ist als die bis zu mikroskopisch kleinen Aluminiumkügelchen.

Eine Deformierung kann allerdings auch durch eine Beaufschlagung des Verbundstoffes mit Kälte oder Wärme erfolgen. Dabei werden die Bestandteile des Verbundstoffes selbstverständlich unterschiedlich deformiert, vor allem, wenn es sich bei den unterschiedlichen Bestandteilen um ein Metall bzw. um ein Kunststoff handelt. In jedem Fall findet hier aber bereits schon ein partielles Abtrennen der Verbundstoffe voneinander statt, so dass der spätere Trennvorgang wesentlich erleichtert wird. Die thermische Behandlung des Verbundstoffes kann beispielsweise in einem Extruder erfolgen.

Das unterschiedliche Deformieren bewirkt, dass sich die einzelnen Bestandteile voneinander trennen, so dass dann später ein Scheiden von Kunststoff und Metallteilen auf einfache Art und Weise möglich ist. Beispielsweise werden die Metallteile durch Sieben von dem Kunststoff getrennt, da der Kunststoff im Sieb verbleibt, während die mikroskopisch kleinen Aluminiumkügelchen durch die Maschen fallen. Ein Trennen ist auch möglich in einem Fliessbett oder durch Flotation, wobei die mikroskopisch kleinen Metallkügelchen absinken, während der Kunststoff zur Oberfläche der Trennflüssigkeit treibt.

Sobald dann durch das Trennen eine Metall- und/oder Kunststoffraktion gewonnen ist, sollte diese bevorzugt getrocknet und zur Verminderung des beanspruchten Raumes brikettiert werden.

Es versteht sich von selbst, dass bei einem Deformieren durch selektives Mahlen vor dem eigentlichen Mahlprozeß der Verbundstoff einer Vorzerkleinerung unterworfen werden sollte, damit nicht diese ganze Arbeit innerhalb der Mühle durchgeführt werden muss. Dabei erfolgt ein Zerkleinern des Verbundstoffes auf Teile mit einem Durchmesser von weniger als 10 mm.

Als Vorrichtung hat sich besonders eine Mikrowirbelmühle angeboten, welche mit einem Rotor bestückt ist, der so hoch beschleunigt werden kann, dass die Behandlung im Ultraschallbereich erfolgt. Hierdurch werden in der Mikromühle Kleinstwirbel erzeugt, in denen die einzelnen Bestandteile gegeneinander prallen, wodurch schlussendlich der metallische Teil seine mikroskopisch kleine Kugelform erreicht und damit von dem Kunststoffbestandteil getrennt wird.

Insgesamt arbeitet dieses Verfahren ausserordentlich wirkungsvoll und kostengünstig. Zu erwähnen ist vor allem, dass das Metall nunmehr in fast reiner Form vorliegt und so äusserst günstig wiederverwertet werden kann.

## Patentansprüche

1. Verfahren zum Behandeln von Metall-Kunststoff-Verbundstoffen, beispielsweise von Aluminium-Kunststoff-Verbundfolie,
gekennzeichnet durch
eine Deformierung des Verbundstoffes und eine Trennung unter Ausnutzung eines Unterschiedes der einzelnen Stoffe.

2. Verfahren nach Anspruch 1, dadurch gekennzeichent, dass der Verbundstoff einer selektiven Mahlung unterzogen wird.

3. Verfahren nach Anspruch 2, dadurch gekennzeichnet, dass der Verbundstoff vor dem Mahlen vorzerkleinert wird.

4. Verfahren nach Anspruch 3, dadurch gekennzeichnet, dass die Zerkleinerung auf Bestandteile des Verbundstoffes mit einem Durchmesser kleiner 10 mm erfolgt.

5. Verfahren nach einem der Ansprüche 2 bis 4, dadurch gekennezeichnet, dass der Verbundstoff in einer Mikrowirbelmühle behandelt wird.

6. Verfahren nach Anspruch 5, dadurch gekennzeichnet, dass die Behandlung des Verbundstoffes in der Mikrowirbelmühle im Ultraschallbereich erfolgt.

7. Verfahren nach Anspruch 1, dadurch gekennzeichnet, dass der Verbundstoff bzw. seine Bestandteile durch Erwärmen und/oder Kühlen deformiert werden, beispielsweise in einem Extruder.

8. Verfahren nach wenigstens einem der Ansprüche 1 bis 7, dadurch gekennzeichnet, dass insbesondere der Metallbestandteil des Verbundstoffes deformiert wird.

9. Verfahren nach wenigstens einem der Ansprüche 1 bis 8, dadurch gekennzeichnet, dass das Trennen durch Sieben erfolgt.

10. Verfahren nach wenigstens einem der Ansprüche 1 bis 8, dadurch gekennzeichnet, dass das Trennen im Fliessbett, durch Flotation od. dgl. er- folgt.

11. Verfahren nach wenigstens einem der Ansprüche 1 bis 10, dadurch gekennzeichnet, daß die Metall- und/oder Kunststoffteile getrocknet werden.

12. Verfahren nach Anspruch 11, dadurch gekennzeichnet, daß die Metall- und/oder Kunststoffteile anschließend brikettiert werden.
